# EUROPÄISCHE PATENTSCHRIFT

(11) **EP 3 469 566 B1**
(45) Veröffentlichungstag und Bekanntmachung des Hinweises auf die Patenterteilung: **22.07.2020**
(21) Anmeldenummer: 17716865.5
(22) Anmeldetag: 10.04.2017
(51) Int. Cl.: G08B 17/00, G08B 25/10

(54) **GEFAHRENMELDER SOWIE VERFAHREN ZUM ÜBERTRAGEN EINES GEFAHRENSIGNALS UND SYSTEM MIT DEM GEFAHRENMELDER**
HAZARD DETECTOR AND METHOD FOR TRANSMITTING A HAZARD SIGNAL AND SYSTEM COMPRISING THE HAZARD DETECTOR
AVERTISSEUR DE DANGER AINSI QUE PROCÉDÉ DE TRANSMISSION D'UN SIGNAL DE DANGER ET SYSTÈME POURVU D'UN AVERTISSEUR DE DANGER

(30) Priorität: 08.06.2016 DE 102016110530
(43) Veröffentlichungstag der Anmeldung: 17.04.2019
(73) Patentinhaber: Minimax GmbH & Co. KG, 23840 Bad Oldesloe (DE)
(72) Erfinder: ZIEMS, Bernd, 23619 Zarpen (DE); DITTMER, Hauke, 23769 Fehmarn (DE); SIEMER, Dirk, 23847 Rethwisch (DE); GROTHOFF, Axel, 24539 Neumünster (DE); ZUELZER, Peter, 22391 Hamburg (DE); STAMER, Arne, 23847 Siebenbäumen (DE); WISNIEWSKI, Pawel, 23843 Bad Oldesloe (DE); HALLWASS-FEDDER, Bernd, 22159 Hamburg (DE)
(74) Vertreter: Eisenführ Speiser
(86) Internationale Anmeldenummer: PCT/EP2017/058511
(87) Internationale Veröffentlichungsnummer: WO 2017/211481

(56) Entgegenhaltungen:
- DE-A1-102013 207 990
- DE-U1- 29 814 738
- DE-U1- 29 919 926
- US-B1- 6 392 536

## Beschreibung

Die Erfindung betrifft den Bereich von Gefahrenmeldern, die gekoppelt mit Auswerteeinheiten, wie zum Beispiel Brandmelder- und/oder Löschsteuerzentralen zum dauerhaften Überwachen von Gebäuden und/oder Objekten dienen.

Gemäß dem Stand der Technik weisen Gefahrenmelder eine Schnittstelle auf, mit der der Gefahrenmelder vorzugsweise mit einer einzelnen Brandmelder- und/oder Löschsteuerzentrale verbindbar ist. Nach Ansprechen oder Auslösen des Gefahrenmelders aufgrund eines Ereignisses, wie zum Beispiel eines Brandes, wird dann eine Ereignismeldung von dem Gefahrenmelder an eine Brandmelderzentrale eines Brandschutzsystems gesendet. Die Gefahrenmelder sind hierzu mit der Brandmelderzentrale über eine Drahtleitung verbunden.

DE 10 2013 207 990 A1 offenbart Gefahrenmelder, insbesondere Punktmelder, mit einem Meldergehäuse, mit einem zentral im oder am Meldergehäuse angebrachten Temperatursensor zur weitgehend richtungsunabhängigen Erfassung einer Temperatur in der Umgebung des Gefahrenmelders und mit einer datentechnisch mit dem Temperatursensor verbundenen Auswerteeinheit zumindest zur Auswertung der erfassten Umgebungstemperatur, wobei der Temperatursensor und die Auswerteeinheit durch eine drahtlose Verbindung zur Datenübertragung miteinander verbunden sind. DE 298 14 738 U1 offenbart Berührungsleser und drahtlose Messwertaufnehmer für die Überwachung von Gas, Rauch, Wasser und Temperatur-Daten mit einer auf RFID arbeitenden Auswerteeinheit. Der Messwertaufnehmer bezieht die nötige Energie zur Messwertaufnahme über ein elektromagnetisches Feld und sendet die gemessenen Daten über das gleiche elektromagnetische Feld zurück und benötigt somit keine eigene Batterie oder eine Spannungszuführung.

Dank dem Gefahrenmelder können nach Eintreffen einer Ereignismeldung an einer Brandmelderzentrale über ein detektiertes Ereignis, beispielsweise eines Brandes, ein oder mehrere Folgeaktionen ausgeführt werden. Ein Beispiel für eine derartige Folgeaktion ist zum Beispiel eine automatische Löschung.

Die elektrischen Leitungen zur Übertragung eines detektierten Ereignisses sind beispielsweise sogenannte grenzwertetechnikbasierende Stromkreise, die auch als Grenzwertmelderlinien oder Stromerhöhungslinien bezeichnet werden. Bei den bekannten auf Grenzwerttechnik basierenden Stromkreisen wird zur Meldung von Ereignissen beispielsweise von der Brandmelder- und/oder Löschsteuerzentrale eine vorgegebene konstante Spannung, zum Beispiel 9 Volt, für den Stromkreis zur Verfügung gestellt. Der Stromkreis umfasst beispielsweise eine Zweidrahtleitung, wobei die beiden Leitungen auf der einen Seite mit einer konstanten Spannung von der Brandmelder- und/oder Löschsteuerzentrale beaufschlagt werden. Auf der anderen Seite der Zweidrahtleitungen sind die beiden Leitungen über einen Abschlusswiderstand miteinander verbunden. Aufgrund des Abschlusswiderstandes fließt ein vordefinierter, im Wesentlichen konstanter Strom durch den Stromkreis.

Die Gefahrenmelder sind nun beispielsweise parallel zum Abschlusswiderstand verbunden, wobei jeder Gefahrenmelder eine Stromsenke, beispielsweise einen schaltbaren Innenwiderstand, aufweist und im Ereignisfall diesen Innenwiderstand derartig in den Stromkreis einschaltet, dass sich der Gesamtstrom, der von der Brandmelder- und/oder Löschsteuerzentrale am Eingang des Stromkreises gemessen wird, erhöht.

Durch Erfassen dieser Stromerhöhung in der Brandmelder- und/oder Löschsteuerzentrale lässt sich nun auf ein Ereignis schließen, sodass auf dieses von der Brandmelder- und/oder Löschsteuerzentrale in geeigneter Weise reagiert werden kann.

Durch die weiter fortschreitende Automatisierung in Gebäuden entsteht jedoch immer häufiger der Wunsch, einen ohnehin vorhandenen Gefahrenmelder mit nicht nur einer Auswerteeinheit, wie einer Brandmelder- und/oder Löschsteuerzentrale, zu verbinden, um die Sensordaten zu nutzen. Vielmehr ist es daher wünschenswert, den Gefahrenmelder neben der Brandmelder- und/oder Löschsteuerzentrale auch mit weiteren Auswerteeinheiten elektrisch zu verbinden. Beispiele für derartige weitere Auswerteeinheiten sind weitere Brandmelderzentralen eines sich vom Gefahrenmelderhersteller unterscheidenden Fremdanbieters, Gebäudeleitsysteme oder sogar weitere Einheiten, wie weitere Module derselben Brandmelder- und/oder Löschsteuerzentrale, um zum Beispiel mit unterschiedlichen Verbindungen des Gefahrenmelders mit derselben Brandmelder- und/oder Löschsteuerzentrale unterschiedliche Signale zwischen dem Gefahrenmelder und der Brandmelder- und/oder Löschsteuerzentrale auszutauschen.

Hierbei ergibt sich jedoch das Problem, dass im Falle, dass beispielsweise von einer Auswerteeinheit von einem Gefahrenmelder Daten abgerufen werden, bei dem Signale in Form von Spannungs- oder Stromvariationen zum Gefahrenmelder oder vom Gefahrenmelder zur Auswerteeinheit übertragen werden, eine weitere mit dem Gefahrenmelder verbundene Auswerteeinheit die Variationen bereits als ein Ereignis interpretieren könnte und daraufhin einen Alarm auslösen könnte. Selbst wenn beispielsweise unterschiedliche Schnittstellen für zwei unterschiedliche Auswerteeinheiten vorgesehen würden, würden aufgrund des Ansteuerns des Gefahrenmelders über die eine Schnittstelle Stromflüsse im Gefahrenmelder erzeugt werden, die zum Beispiel Folge eines Potentialausgleichs zwischen den Schnittstellen sein könnten. Auch hier bestünde dann die Gefahr, dass derartige Ströme auch an der weiteren Schnittstelle messbar wären, sodass diese bei der weiteren Auswerteeinheit als Ereignis detektiert würden und somit zu Fehlalarmen führen könnten.

Der Erfindung lag vor diesem Hintergrund die Aufgabe zugrunde, einen Gefahrenmelder anzugeben, der die im Stand der Technik aufgefundenen Nachteile möglichst weitgehend überwindet. Aufgabe der vorliegenden Erfindung ist es daher, einen Gefahrenmelder und ein Verfahren zum Übertragen eines Gefahrensignals zu finden, das es ermöglicht, mehrere Auswerteeinheiten mit einem einzigen Gefahrenmelder elektrisch zu verbinden.

Die Erfindung umfasst zur Lösung dieser Aufgabe einen Gefahrenmelder für eine Auswerteeinheit. Die Auswerteeinheit ist zum Beispiel eine Brandmelder- und/oder Löschsteuerzentrale. Der Gefahrenmelder ist zum Beispiel ein Brandgas- oder Rauchgasmelder, ein Wärmemelder, ein Rauchmelder, ein Funkenmelder oder Flammenmelder. Der Gefahrenmelder ist beispielsweise auch ein Melder für thermische Zersetzungsprozesse.

Der Gefahrenmelder umfasst ein Gehäuse und mindestens eine Sensoreinheit oder eine Sensorschnittstelle zum Anschluss der Sensoreinheit. Die Sensoreinheit dient zum Erfassen einer Gefahrenkenngröße, die zum Beispiel eine Brandkenngröße ist. Eine Brandkenngröße ist beispielsweise eine erhöhte Umgebungstemperatur oder eine erhöhte Menge an Rauchpartikeln.

Mit der Sensoreinheit oder der Sensorschnittstelle ist ferner eine erste elektronische Baugruppe elektrisch verbunden. Die erste elektronische Baugruppe dient zur Verarbeitung von Sensorsignalen der Sensoreinheit. Diese Sensorsignale sind demnach beispielsweise repräsentativ für eine Gefahrenkenngröße. Die elektrische Verbindung mit der Sensoreinheit oder der Sensorschnittstelle dient demnach, um die mit der Sensoreinheit erfasste Gefahrenkenngröße als Sensorsignal zur ersten elektronischen Baugruppe zu übertragen.

Außerdem umfasst die Erfindung eine zweite elektronische Baugruppe sowie eine erste Schnittstelle. Die erste Schnittstelle und die zweite elektronische Baugruppe sind elektrisch miteinander verbunden. Die erste Schnittstelle dient zum elektrischen Verbinden mit einer örtlich beabstandeten Auswerteeinheit. Demnach dient die Verbindung der zweiten elektronischen Baugruppe mit der ersten Schnittstelle somit zum indirekten Verbinden der örtlich beabstandeten Auswerteeinheit mit der zweiten elektronischen Baugruppe. Ferner weisen die erste elektronische Baugruppe und die zweite elektronische Baugruppe eine drahtlose Datenverbindung zum Übertragen der verarbeiteten Sensorsignale von zumindest der ersten elektronischen Baugruppe zur zweiten elektronischen Baugruppe auf. Zumindest die erste elektronische Baugruppe und die zweite elektronische Baugruppe sind innerhalb des Gehäuses angeordnet.

Gemäß der Erfindung wird demnach eine Gefahrengröße mit einer Sensoreinheit des Gefahrenmelders oder mit einer Sensoreinheit, die mit einer Sensorschnittstelle des Gefahrenmelders verbunden ist, erkannt. Die Sensorsignale der Sensoreinheit werden dann mit einer ersten elektronischen Baugruppe des Gefahrenmelders, die mit der Sensoreinheit elektrisch verbunden ist, verarbeitet. Ein Verarbeiten umfasst beispielsweise eine Analog-Digital-Wandlung und/oder ein Verstärken der Signale. Daraufhin werden die verarbeiteten Sensorsignale mit einer drahtlosen Datenverbindung von der ersten elektronischen Baugruppe zu einer zweiten elektronischen Baugruppe des Gefahrenmelders innerhalb des Gehäuses des Gefahrenmelders übertragen. Von der zweiten elektronischen Baugruppe werden die verarbeiteten Sensorsignale, die zuvor drahtlos übertragen wurden, mittels einer ersten Schnittstelle, die mit der zweiten elektronischen Baugruppe elektrisch verbunden ist, an eine örtlich beabstandete Auswerteeinheit übertragen. Die Auswerteeinheit, die beispielsweise eine Brandmelderzentrale ist, kann dann im Brandfall Folgemaßnahmen einleiten.

Dank der drahtlosen Datenverbindung sind Signale an der ersten Schnittstelle zum elektrischen Verbinden mit einer örtlich beabstandeten Auswerteeinheit unabhängig von den Potentialen, die die Sensorsignale oder die verarbeiteten Sensorsignale repräsentieren, ausgebbar.

Gemäß einer ersten vorteilhaften Ausführungsform sind die erste elektronische Baugruppe und die zweite elektronische Baugruppe galvanisch voneinander getrennt. Das heißt, die beiden Baugruppen weisen überhaupt keine elektrisch leitende Verbindung auf.

Gemäß einer weiteren Ausführungsform ist die erste elektronische Baugruppe eingerichtet, von der Sensoreinheit oder der Sensorschnittstelle erhaltene Sensorsignale, die auch als Gefahrensignale bezeichnet werden können, zu empfangen. Die erste elektronische Baugruppe ist dann eingerichtet, diese Sensorsignale oder Gefahrensignale auf das Vorliegen eines Alarmfalls hin zu interpretieren. Ferner ist die erste elektronische Baugruppe eingerichtet, bei Vorliegen eines Alarmfalls ein für den Alarmfall repräsentatives Alarmsignal zu generieren.

Insgesamt ist der Gefahrenmelder also eingerichtet, das Alarmsignal über die drahtlose Datenverbindung an die zweite elektronische Baugruppe und von der zweiten elektronischen Baugruppe über die erste Schnittstelle an eine Auswerteeinheit zu übertragen. Demnach wird also zunächst das Gefahrensignal mit der ersten elektronischen Baugruppe auf das Vorliegen eines Alarmfalls interpretiert. Demnach steht über die erste elektronische Baugruppe bereits ein Indikator zur Verfügung, der es ermöglicht, das Vorliegen eines Alarmfalls durch ein Alarmsignal abzurufen oder abzugreifen. Wie gemäß diesem Ausführungsbeispiel vorgesehen, kann dieses Alarmsignal über die drahtlose Verbindung an die zweite elektronische Baugruppe und damit an die erste Schnittstelle übertragen werden.

Das Übertragen eines repräsentativen Alarmsignals anstatt des Sensorsignals an sich ermöglicht eine robuste drahtlose Datenübertragung, da nur eine geringe Datenmenge nötig ist, um entweder das Vorliegen eines Alarmfalls oder das Vorliegen keines Alarmfalls in Form des Alarmsignals zu übertragen. Demgegenüber wären im Falle, dass die Sensorsignale, insbesondere die Sensorrohsignale, über die drahtlose Datenverbindung ohne die Vorverarbeitung mit der ersten elektronischen Baugruppe übertragen würden, hohe Datenübertragungsraten nötig. Diese hohen Datenübertragungsraten wären nicht mit den Anforderungen an eine hohe Störsicherheit, wie sie bei Sicherheitseinrichtungen gewünscht und häufig vorgeschrieben ist, vereinbar.

Gemäß einer weiteren Ausführungsform ist die Auswerteeinheit eine örtlich beabstandete Brandmelder- und/oder Löschsteuerzentrale, eine speicherprogrammierbare Steuerung, ein Gebäudeleitsystem oder ein Aktor einer Löschanlage. Ein derartiger Aktor ist beispielsweise ein Magnetventil.

Gemäß einer weiteren Ausführungsform umfasst die drahtlose Datenverbindung einen ersten und einen zweiten Transceiver. Hierbei umfasst die erste elektronische Baugruppe den ersten Transceiver und die zweite elektronische Baugruppe den zweiten Transceiver. Der erste und der zweite Transceiver sind beispielsweise jeweils optische Transceiver wie zum Beispiel IrDA-Transceiver. Alternativ sind der erste und der zweite Transceiver Funktransceiver, wie zum Beispiel Bluetooth- oder NFC-Transceiver.

Vorteil einer drahtlosen Datenverbindung in Form von Transceivern ist eine bidirektionale Kommunikation zwischen der ersten und der zweiten elektronischen Baugruppe. Demnach können über die drahtlose Datenverbindung nicht nur Alarmsignale von der ersten elektronischen Baugruppe zur zweiten elektronischen Baugruppe übertragen werden, sondern es können auch in der entgegengesetzten Richtung beispielsweise Statusabfragesignale von der zweiten elektronischen Baugruppe zur ersten elektronischen Baugruppe übertragen werden.

Die Verwendung von IrDA-Transceivern, Bluetooth- oder NFC-Transceivern ist vorteilhaft, da diese in großen Stückzahlen standardisiert und daher besonders günstig erhältlich sind. Hierdurch wird eine günstige Fertigung des Gefahrenmelders an sich ermöglicht.

Gemäß einer weiteren Ausführungsform ist die drahtlose Datenverbindung eingerichtet, mit einem dritten Transceiver, der außerhalb des Gehäuses angeordnet ist, Daten auszutauschen. Es ist daher beispielsweise möglich, ein externes Gerät, das diesen dritten Transceiver aufweist, in den Bereich des Gehäuses zu bringen und Daten mit der ersten elektronischen Baugruppe und/oder der zweiten elektronischen Baugruppe auszutauschen. Vorteilhaft ist hierbei, dass die bereits vorhandene drahtlose Datenverbindung genutzt werden kann, um Serviceoperationen des Gefahrenmelders, wie zum Beispiel eine Kalibrierung oder eine Installation nach der Inbetriebnahme, über ein externes Gerät in einfacher Art und Weise auszuführen.

Hierbei ist es selbstverständlich möglich, dass es sich bei dem dritten Transceiver ebenfalls um einen optischen Transceiver oder einen Funktransceiver handelt. Im Falle eines optischen Transceivers weist das Gehäuse des Gefahrenmelders für die optische Verbindung des dritten Transceivers mit dem ersten und dem zweiten Transceiver einen optisch durchlässigen Bereich auf.

Gemäß einer weiteren vorteilhaften Ausführungsform ist die erste elektronische Baugruppe mit einer zweiten Schnittstelle direkt oder indirekt verbunden. Die zweite Schnittstelle ist eingerichtet, um die erste elektronische Baugruppe sowie zusätzlich oder alternativ die Sensoreinheit mit Energie zum Betrieb zu versorgen.

Gemäß dieser Ausführungsform ist die zweite Schnittstelle zusätzlich oder alternativ eingerichtet, um eine Datenverbindung mit der Auswerteeinheit oder einer weiteren Auswerteeinheit herzustellen.

Demnach ist also gemäß dieser Ausführungsform eine zweite Schnittstelle vorgesehen, die mit der ersten elektronischen Baugruppe verbunden ist. Diese Schnittstelle dient demnach lediglich zur Spannungsversorgung, alternativ zur Datenverbindung mit der Auswerteeinheit oder einer weiteren Auswerteeinheit oder zur Spannungsversorgung und zur Datenverbindung. Die erste und die zweite Schnittstelle sind demnach durch die drahtlose Datenverbindung der ersten und der zweiten elektronischen Baugruppe miteinander verbunden, wobei die elektrische Versorgung und/oder ein Datenaustausch mit den elektronischen Baugruppen jeweils über eine separate Schnittstelle erfolgt. Elektrische Signalveränderungen an einer der ersten oder zweiten Schnittstellen können demnach nicht zu Signalveränderungen an der anderen der beiden Schnittstellen aufgrund von ungewollten Potentialausgleichsströmen führen.

Gemäß einer weiteren vorteilhaften Ausführungsform weist das Gehäuse ein Gehäuseoberteil und ein Gehäuseunterteil auf. Das Gehäuseoberteil und das Gehäuseunterteil sind lösbar miteinander verbindbar. Zumindest die erste elektronische Baugruppe ist mit dem Gehäuseoberteil und zumindest die zweite elektronische Baugruppe ist mit dem Gehäuseunterteil mechanisch verbindbar oder verbunden.

Durch diese Verbindung sind die beiden Baugruppen sicher im Gehäuse gehalten, wobei die erste elektronische Baugruppe nur mit dem Gehäuseoberteil und die zweite elektronische Baugruppe nur mit dem Gehäuseunterteil mechanisch verbunden ist. Hierdurch ist ein leichtes Öffnen des Gehäuses möglich.

Auf elektrische Verbindungen zwischen der ersten und der zweiten elektronischen Baugruppe wurde demnach verzichtet, sodass auch keine elektrischen Verbindungen zwischen dem ersten und dem zweiten Gehäuseoberteil beim Öffnen des Gehäuses gelöst werden müssen. Der separate Austausch des Gehäuseoberteils oder des Gehäuseunterteils bei einem Gefahrenmelder im Falle des Defekts, beispielsweise des Oberteils oder des Unterteils, ist somit auf einfache Weise möglich.

Gemäß einer weiteren Ausführungsform umfasst das Gehäuseunterteil die zweite Schnittstelle, wobei die zweite Schnittstelle als Energieversorgungs- und Signalverteilungsvorrichtung, vorzugsweise als Klemmleiste, ausgebildet ist. Die zweite elektronische Baugruppe ist als ein Relaismodul und/oder ein Schnittstellenmodul ausgebildet. Zusätzlich oder alternativ ist die zweite elektronische Baugruppe ein Relaismodul, ein Kommunikationsmodul und/oder ein Schnittstellenmodul, das die erste Schnittstelle aufweist.

Außerdem betrifft die Erfindung ein System mit mindestens einem Gefahrenmelder gemäß einer der zuvor genannten Ausführungsformen und einer Auswerteeinheit, die eine beabstandete Brandmelder- und/oder Löschsteuerzentrale, eine speicherprogrammierbare Steuerung, ein Gebäudeleitsystem oder ein Aktor einer Löschanlage ist.

Weitere Ausführungsformen der Erfindung ergeben sich anhand der in den Zeichnungen näher beschriebenen Ausführungsbeispiele. In den Zeichnungen zeigen:
- Fig. 1: ein erstes Ausführungsbeispiel eines Gefahrenmelders und
- Fig. 2: ein weiteres Ausführungsbeispiel des Gefahrenmelders.

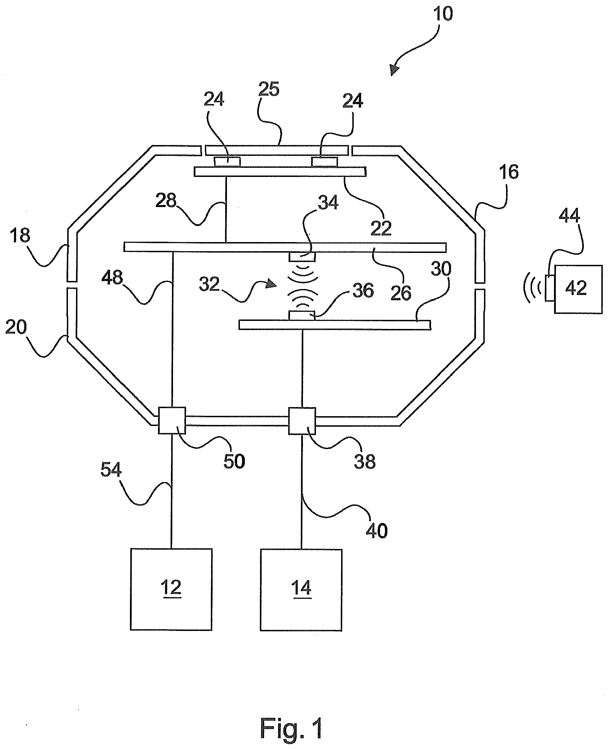

Fig. 1 zeigt einen Gefahrenmelder 10, der mit einer Brandmelder- und/oder Löschsteuerzentrale 12 sowie einer speicherprogrammierbaren Steuerung 14 verbunden ist. Die Brandmelder- und/oder Löschsteuerzentrale 12 sowie die speicherprogrammierbare Steuerung 14 können auch als Auswerteeinheiten 12, 14 bezeichnet werden.

Der Gefahrenmelder 10 weist ein Gehäuse 16 auf, das ein Gehäuseoberteil 18 und ein Gehäuseunterteil 20 umfasst. Im Inneren des Gehäuses 16 ist eine Sensoreinheit 22 mit zwei Sensoren 24 angeordnet. Die Sensoren 24 sind nahe am Rand des Gehäuseoberteils 18 angeordnet, wobei im Gehäuseoberteil 18 im Bereich der Sensoren 24 ein zumindest teilweise durchlässiger Bereich 25 vorgesehen ist. Dieser durchlässige Bereich 25 entspricht zum Beispiel einem Gitter, um Brandkenngrößen, wie zum Beispiel Gase oder Partikel in der Umgebungsluft, zu den Sensoren 24 durchzulassen.

Die Sensoreinheit 22 mit den Sensoren 24 ist mit einer ersten elektronischen Baugruppe 26 über eine elektrische Verbindung 28 verbunden. Die erste elektronische Baugruppe 26 empfängt Sensorsignale, die zum Beispiel Gefahrensignale SG sind. Die Gefahrensignale SG oder Sensorsignale werden von der Sensoreinheit 22 in Abhängigkeit der Umgebung der Sensoren 24 erzeugt. Die erste elektronische Baugruppe 26 interpretiert diese Gefahrensignale SG auf das Vorliegen eines Alarmfalls. Das heißt, dass beispielsweise im Falle vordefinierter Gefahrensignale SG ein Alarmfall angenommen wird, während im Falle von Gefahrensignalen SG, die nicht den vordefinierten Gefahrensignalen SG entsprechen, ein Nichtalarmfall interpretiert wird.

Bei Vorliegen eines Alarmfalls wird ein für den Alarmfall repräsentatives Alarmsignal SA erzeugt und dieses Alarmsignal SA an eine zweite elektronische Baugruppe 30 übertragen. Die zweite elektronische Baugruppe 30 ist hierfür mit der ersten elektronischen Baugruppe 26 über eine drahtlose Datenverbindung 32 verbunden. Die drahtlose Datenverbindung 32 umfasst einen ersten Transceiver 34 und einen zweiten Transceiver 36. Hierbei ist der erste Transceiver 34 Bestandteil der ersten elektronischen Baugruppe 26 oder zumindest mit der ersten elektronischen Baugruppe 26 verbunden. Der zweite Transceiver 36 ist Bestandteil der zweiten elektronischen Baugruppe 30 oder zumindest mit der zweiten elektronischen Baugruppe 30 elektrisch verbunden.

Zunächst wird also das Alarmsignal SA über die drahtlose Datenverbindung 32 und daraufhin das Alarmsignal SA weiter an eine erste Schnittstelle 38, mit der die speicherprogrammierbare Steuerung 14 über eine Verbindung 40 verbunden ist, gesendet oder übertragen. Die speicherprogrammierbare Steuerung 14 ist demnach also über die elektrische Verbindung 40 und die Schnittstelle 38 mit der zweiten elektronischen Baugruppe 30 verbunden. Das Alarmsignal SA wird also zur speicherprogrammierbaren Steuerung im Falle eines Alarms übertragen, sodass die speicherprogrammierbare Steuerung auf das Alarmsignal SA reagieren kann.

Ferner ist ein Servicegerät 42 dargestellt, das einen dritten Transceiver 44 aufweist. Das Servicegerät 42 kann über den dritten Transceiver 44 ebenfalls Daten mit dem ersten Transceiver 34 oder dem zweiten Transceiver 36 austauschen. Demnach sind zum Beispiel über das Servicegerät 42 Statusmeldungen des Gefahrenmelders 10 abrufbar. Zusätzlich oder alternativ dient das Servicegerät 42 zum Programmieren des Gefahrenmelders 10 über den dritten Transceiver 44, mit dessen Hilfe die zu programmierenden Befehle an den ersten Transceiver 34 und/oder den zweiten Transceiver 36 übertragen werden.

Die erste elektronische Baugruppe 26 ist außerdem über eine weitere elektrische Verbindung 48 mit einer zweiten Schnittstelle 50 verbunden. Die zweite Schnittstelle 50 ist über eine elektrische Verbindung 54 mit einer Brandmelder- und/oder Löschsteuerzentrale 12 verbunden. Auch die Verbindung der ersten elektronischen Baugruppe 26 über die zweite Schnittstelle 50 mit der Brandmelder- und/oder Löschsteuerzentrale 12 ermöglicht das Übertragen des Alarmsignals SA, das in der ersten elektronischen Baugruppe 26 generiert wird, an die Brandmelder- und/oder Löschsteuerzentrale 12. Außerdem versorgt die Brandmelder- und/oder Löschsteuerzentrale die erste elektronische Baugruppe 26 über die elektrischen Verbindungen 48, 54 und die zweite Schnittstelle 50 mit Energie. Die elektrische Verbindung 28 leitet zudem die Energie weiter an die Sensoreinheit 22. Dank der drahtlosen Datenverbindung 32 ist eine komplette galvanische Trennung der Brandmelder- und/oder Löschsteuerzentrale 12 von der speicherprogrammierbaren Steuerung 14 möglich, sodass diese beispielsweise mit unterschiedlichen Spannungen oder Strömen arbeiten können. Potentialunterschiede der unterschiedlichen Auswerteeinheiten 12, 14 an den Schnittstellen 38, 50 führen demnach nicht zu Spannungsausgleichströmen zwischen den elektronischen Baugruppen 26, 30 innerhalb des Gefahrenmelders 10, die beispielsweise als ein Alarmsignal SA an einer der Schnittstellen 50 oder 38 interpretiert werden können, obwohl ein Alarmsignal SA gar nicht von der ersten elektronischen Baugruppe 26 erzeugt wurde.

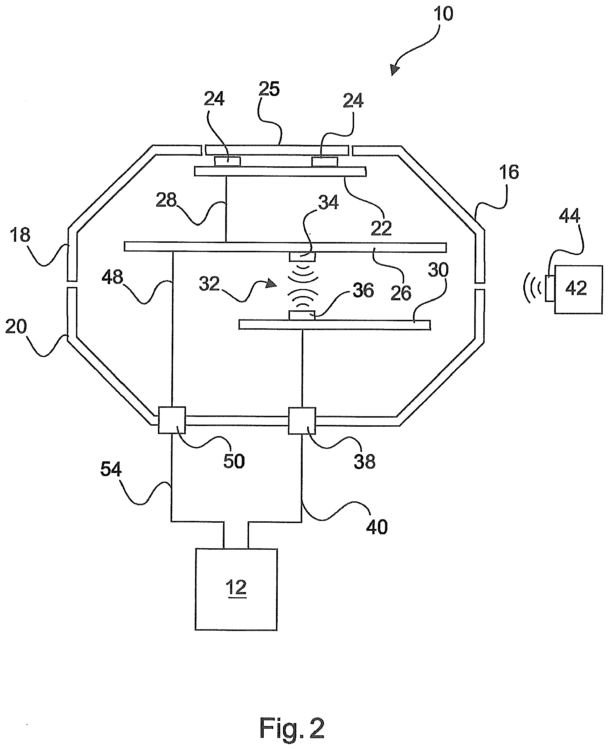

Fig. 2 zeigt den gleichen Aufbau des Gefahrenmelders 10 wie Fig. 1. Daher bezeichnen auch gleiche Bezugszeichen in den Figuren gleiche Merkmale.

In Fig. 2 sind jedoch beide Schnittstellen 50, 38, nämlich die erste Schnittstelle 50 und die zweite Schnittstelle 38, jeweils über eine elektrische Verbindung 54, 40 mit der gleichen Brandmelder- und/oder Löschsteuerzentrale 12 verbunden. Hierbei sind die beiden Schnittstellen 50, 38 über die entsprechenden elektrischen Verbindungen 54, 40 jedoch mit unterschiedlichen Modulen der Brandmelder- und/oder Löschsteuerzentrale 12 verbunden. Zur besseren Übersicht sind diese Module jedoch nicht einzeln dargestellt.

Bei diesem Ausführungsbeispiel ist es denkbar, dass eines der Module nur eine Spannung oder einen Strom an einer der Schnittstellen 38, 50, insbesondere an der ersten Schnittstelle 38, überwacht und im Falle eines sich ändernden Stroms oder einer sich ändernden Spannung diese Änderung als Alarmsignal SA interpretiert. Das weitere Modul der Brandmelder- und/oder Löschsteuerzentrale 12 ist dann ein Modul, das über digitale Signale mit der anderen Schnittstelle 38, 50, insbesondere der zweiten Schnittstelle 50, kommunizieren kann und somit einerseits ein digitales Alarmsignal SA empfangen kann und andererseits gezielt, beispielsweise durch Anforderung eines Benutzers, weiterführende Informationen vom Gefahrenmelder 10 abrufen kann. Weiterführende Informationen sind zum Beispiel Statusmeldungen des Gefahrenmelders 10.

Zusätzlich lässt sich über die digitale elektrische Verbindung 54 auch der Gefahrenmelder 10 beispielsweise bei der Installation programmieren. Hierbei kann dank der Erfindung sichergestellt werden, dass eine Programmierung oder der Abruf des Status über die eine Schnittstelle, beispielsweise die zweite Schnittstelle 50, keinen Einfluss auf die Signale der anderen Schnittstelle, beispielsweise der ersten Schnittstelle 38, hat. Demnach besteht nicht die Gefahr, dass beim Datenaustausch mit dem Gefahrenmelder 10 versehentlich ein Signal, das beispielsweise einem Alarmsignal SA für den Alarmfall entspricht, im Gefahrenmelder entsteht und über die erste Schnittstelle 38 ausgegeben wird. Der Gefahr eines falschen Auslösens, also eines Fehlalarms der Brandmelder- und/oder Löschsteuerzentrale 12 ist somit entgegengewirkt.

### Bezuaszeichenliste

- 10: Gefahrenmelder
- 12: Brandmelder- und/oder Löschsteuereinheit
- 12, 14: Auswerteeinheit
- 14: Speicherprogrammierbare Steuerung
- 16: Gehäuse
- 18: Gehäuseoberteil
- 20: Gehäuseunterteil
- 22: Sensoreinheit
- 24: Sensor
- 25: durchlässiger Bereich
- 26: Erste elektronische Baugruppe
- 28: Verbindung
- 30: Zweite elektronische Baugruppe
- 32: Drahtlose Datenverbindung
- 34: Erster Transceiver
- 36: Zweiter Transceiver
- 38: Erste Schnittstelle
- 40: Verbindung
- 42: Servicegerät
- 44: Dritter Transceiver
- 46: Energieversorgungs- und Signalverteilungsvorrichtung
- 48: Verbindung
- 50: Zweite Schnittstelle
- 52: Verbindung
- 54: Verbindung
- SA: Alarmsignal
- SG: Gefahrensignal

## Patentansprüche

1. Gefahrenmelder für eine Auswerteeinheit (12, 14), z. B. eine Brandmelder- und/oder Löschsteuerzentrale (12), umfassend:
- ein Gehäuse (16),
- mindestens eine Sensoreinheit (22) oder eine Sensorschnittstelle zum Anschluss der Sensoreinheit (22) zum Erfassen einer Gefahrenkenngröße, vorzugsweise einer Brandkenngröße,
- eine erste mit der Sensoreinheit (22) oder der Sensorschnittstelle elektrisch verbundenen elektronische Baugruppe (26) zur Verarbeitung von Sensorsignalen der Sensoreinheit (22),
**dadurch gekennzeichnet, dass** der Gefahrenmelder ferner aufweist:
- eine zweite elektronische Baugruppe (30), die mit mindestens einer ersten Schnittstelle (38) zum elektrischen Verbinden der zweiten elektrischen Baugruppe (30) mit einer örtlich beabstandeten Auswerteeinheit (12, 14) verbunden ist, wobei
die erste elektronische Baugruppe (26) und die zweite elektronische Baugruppe (30) eine drahtlose Datenverbindung (32) zum Übertragen der verarbeiteten Sensorsignale von zumindest der ersten elektronischen Baugruppe (26) zur zweiten elektronischen Baugruppe (30) umfassen und zumindest die erste elektronische Baugruppe (26) und die zweite elektronische Baugruppe (30) innerhalb des Gehäuses (16) angeordnet sind,
wobei die erste elektronische Baugruppe (26) mit einer zweiten Schnittstelle (50) direkt oder indirekt verbunden ist, wobei die zweite Schnittstelle (50) eingerichtet ist, um die erste elektronische Baugruppe (26) und/oder die Sensoreinheit (22) mit Energie zum Betrieb zu versorgen und/oder um eine Datenverbindung mit der Auswerteeinheit (12, 14) oder einer weiteren Auswerteeinheit (12, 14) herzustellen.

2. Gefahrenmelder nach Anspruch 1, wobei die erste elektronische Baugruppe (26) und die zweite elektronische Baugruppe (30) galvanisch voneinander getrennt sind.

3. Gefahrenmelder nach Anspruch 1 oder 2, wobei die erste elektronische Baugruppe (26) eingerichtet ist, von der Sensoreinheit (22) oder der Sensorschnittstelle erhaltene Sensorsignale, die insbesondere Gefahrensignale (SG) sind, zu empfangen, auf das Vorliegen eines Alarmfalls hin zu interpretieren und bei Vorliegen eines Alarmfalls ein für den Alarmfall repräsentatives Alarmsignal (SA) zu generieren, wobei der Gefahrenmelder (10) eingerichtet ist, das Alarmsignal (SA) über die drahtlose Datenverbindung (32) an die zweite elektronische Baugruppe (30) und von der zweiten elektronischen Baugruppe (30) über die erste Schnittstelle (38) an eine Auswerteeinheit (12, 14) zu übertragen.

4. Gefahrenmelder nach einem der vorhergehenden Ansprüche, wobei die Auswerteeinheit (12, 14) eine beabstandete Brandmelder- und/oder Löschsteuerzentrale (12), eine speicherprogrammierbare Steuerung (14), ein Gebäudeleitsystem oder ein Aktor, z.B. ein Magnetventil, einer Löschanlage ist.

5. Gefahrenmelder nach einem der vorhergehenden Ansprüche, wobei die drahtlose Datenverbindung (32) einen ersten Transceiver (34) und einen zweiten Transceiver (36) umfasst, und die erste elektronische Baugruppe (26) den ersten Transceiver (34) und die zweite elektronische Baugruppe (30) den zweiten Transceiver (36) umfasst, und der erste Transceiver (34) und der zweite Transceiver (36) optische Transceiver, vorzugsweise IrDA-Transceiver, oder Funktransceiver, vorzugsweise Bluetooth- oder NFC-Transceiver, sind.

6. Gefahrenmelder nach einem der vorhergehenden Ansprüche, wobei die drahtlose Datenverbindung (32) eingerichtet ist, um mit einem dritten Transceiver (44), der außerhalb des Gehäuses (16) anordenbar ist, Daten auszutauschen.

7. Gefahrenmelder nach einem der vorhergehenden Ansprüche, wobei das Gehäuse (16) ein Gehäuseoberteil (18) und ein Gehäuseunterteil (20) aufweist, welche lösbar miteinander verbindbar sind, wobei zumindest die erste elektronische Baugruppe (26) mit dem Gehäuseoberteil (18) und zumindest die zweite elektronische Baugruppe (30) mit dem unteren Gehäuseteil (20) mechanisch verbunden sind.

8. Gefahrenmelder nach Anspruch 7, wobei das Gehäuseunterteil (20) die zweite Schnittstelle (50) umfasst und die zweite Schnittstelle (50) als eine Energieversorgungs- und Signalverteilungsvorrichtung, vorzugsweise als Klemmleiste, ausgebildet ist, und/oder die zweite elektronische Baugruppe (30) als ein Relais-Modul, ein Kommunikations- und/oder ein Schnittstellenmodul ausgebildet ist, und/oder die zweite elektronische Baugruppe (30) ein Relais-Modul, ein Kommunikationsmodul und/oder ein Schnittstellenmodul mit der ersten Schnittstelle (38) aufweist.

9. Verfahren zum Übertragen eines Gefahrensignals an eine Auswerteeinheit (12, 14), z.B. eine Brandmelder- und/oder Löschsteuerzentrale (12), mit einem Gefahrenmelder (10), insbesondere nach einem der Ansprüche 1 bis 8, umfassend die Schritte:
- Erkennen einer Gefahrenkenngröße, vorzugsweise einer Brandkenngröße, mit mindestens einer Sensoreinheit (22) des Gefahrenmelders (10) oder der mit der Sensorschnittstelle des Gefahrenmelders (10) verbundenen Sensoreinheit (22),
- Verarbeiten der Sensorsignale der Sensoreinheit (22) mit einer ersten elektronischen Baugruppe (26) des Gefahrenmelders (10), die mit der Sensoreinheit (22) elektrisch verbunden ist,
**dadurch gekennzeichnet, dass** das Verfahren ferner aufweist:
- Übertragen der verarbeiteten Sensorsignale mit einer drahtlosen Datenverbindung (32) von zumindest der ersten elektronischen Baugruppe (26) zu einer zweiten elektronischen Baugruppe (30) des Gefahrenmelders (10) innerhalb eines Gehäuses (16) des Gefahrenmelders (10),
- Übertragen der verarbeiteten Sensorsignale von der zweiten elektronischen Baugruppe (30) mittels einer ersten Schnittstelle (38) des Gefahrenmelders (10) an eine örtlich beabstandete Auswerteeinheit (12, 14) und
- Versorgen der ersten elektronischen Baugruppe (26) und/oder der Sensoreinheit (22) mit Energie und/oder Herstellen einer Datenverbindung mit der Auswerteeinheit (12, 10 14) oder einer weiteren Auswerteeinheit (12, 14) mittels einer zweiten Schnittstelle (50).

10. Verfahren nach Anspruch 9, wobei die erste elektronische Baugruppe (26) von der Sensoreinheit (22) Sensorsignale, die insbesondere Gefahrensignale (SG) sind, empfängt, auf Vorliegen eines Alarmfalls hin interpretiert und bei Vorliegen eines Alarmfalls ein für den Alarmfall repräsentatives Alarmsignal (SA) generiert, wobei der Gefahrenmelder (10) das Alarmsignal (SA) über die drahtlose Datenverbindung (32) an die zweite elektronische Baugruppe (30) und von der zweiten elektronischen Baugruppe (30) über die erste Schnittstelle (38) an die Auswerteeinheit (12, 14) überträgt.

11. Verfahren nach Anspruch 9 oder 10, wobei die drahtlose Datenverbindung (32) einen ersten Transceiver (34) und einen zweiten Transceiver (36) umfasst, wobei die erste elektronische Baugruppe (26) den ersten Transceiver (34) und die zweite elektronische Baugruppe (30) den zweiten Transceiver (36) umfasst, und der erste Transceiver (34) und der zweite Transceiver (36) Daten vom ersten Transceiver (34) zum zweiten Transceiver (36) oder vom zweiten Transceiver (36) zum ersten Transceiver (34) überträgt.

12. Verfahren nach einem der Ansprüche 9 bis 11, wobei die drahtlose Datenverbindung (32) mit einem dritten Transceiver (44), der insbesondere außerhalb des Gehäuses (16) anordenbar ist, Daten austauscht.

13. Verfahren nach einem der Ansprüche 9 bis 12, wobei das Gehäuse (16) ein Gehäuseoberteil (18) und ein Gehäuseunterteil (20) aufweist und das Gehäuseoberteil (18) vom Gehäuseunterteil (20) gelöst oder das Gehäuseoberteil (18) mit dem Gehäuseunterteil (20) lösbar verbunden wird.

14. System mit mindestens einem Gefahrenmelder nach einem der Ansprüche 1 bis 8 und einer Auswerteeinheit (12, 14), die eine beabstandete Brandmelder- und/oder Löschsteuerzentrale (12), eine speicherprogrammierbare Steuerung (14), ein Gebäudeleitsystem oder ein Aktor einer Löschanlage ist.

## Claims

1. A hazard detector for an evaluation unit (12, 14), e.g. a fire detector and/or extinguishing control center (12), comprising:
- a housing (16),
- at least one sensor unit (22) or a sensor interface for connecting the sensor unit (22) to capture a hazard parameter, preferably a fire parameter,
- a first electronic assembly (26), electrically connected to the sensor unit (22) or the sensor interface, for processing sensor signals of the sensor unit (22), **characterized in that** the hazard detector further comprises:
- a second electronic assembly (30), connected to at least one first interface (38) for electrically connecting the second electrical assembly (30) to a physically remote evaluation unit (12, 14), wherein
the first electronic assembly (26) and the second electronic assembly (30) comprise a wireless data connection (32) for transmitting the processed sensor signals from at least the first electronic assembly (26) to the second electronic assembly (30), and at least the first electronic assembly (26) and the second electronic assembly (30) are arranged inside the housing (16),
wherein the first electronic assembly (26) is connected to a second interface (50) directly or indirectly, the second interface (50) being configured to supply the first electronic assembly (26) and/or the sensor unit (22) with power for operation and/or to set up a data connection to the evaluation unit (12, 14) or a further evaluation unit (12, 14).

2. The hazard detector as claimed in claim 1, wherein the first electronic assembly (26) and the second electronic assembly (30) are DC isolated from one another.

3. The hazard detector as claimed in claim 1 or 2, wherein the first electronic assembly (26) is configured to receive sensor signals obtained from the sensor unit (22) or the sensor interface, which are in particular hazard signals (SG), to interpret said sensor signals for the existence of an alarm situation and, if an alarm situation exists, to generate an alarm signal (SA) representative of the alarm situation, the hazard detector (10) being configured to transmit the alarm signal (SA) via the wireless data connection (32) to the second electronic assembly (30) and from the second electronic assembly (30) via the first interface (38) to an evaluation unit (12, 14).

4. The hazard detector as claimed in one of the preceding claims, wherein the evaluation unit (12, 14) is a remote fire detector and/or extinguishing control center (12), a programmable logic controller (14), a building management system or an actuator, e.g. a solenoid valve, of an extinguishing installation.

5. The hazard detector as claimed in one of the preceding claims, wherein the wireless data connection (32) comprises a first transceiver (34) and a second transceiver (36), and the first electronic assembly (26) comprises the first transceiver (34) and the second electronic assembly (30) comprises the second transceiver (36), and the first transceiver (34) and the second transceiver (36) are optical transceivers, preferably IrDA transceivers, or radio transceivers, preferably Bluetooth or NFC transceivers.

6. The hazard detector as claimed in one of the preceding claims, wherein the wireless data connection (32) is configured to interchange data with a third transceiver (44) arrangeable outside the housing (16).

7. The hazard detector as claimed in one of the preceding claims, wherein the housing (16) has a housing upper part (18) and a housing lower part (20) detachably connectable to one another, at least the first electronic assembly (26) being mechanically connected to the housing upper part (18) and at least the second electronic assembly (30) being mechanically connected to the lower housing part (20).

8. The hazard detector as claimed in claim 7, wherein the housing lower part (20) comprises the second interface (50) and the second interface (50) is in the form of a power supply and signal distribution apparatus, preferably as a terminal strip, and/or the second electronic assembly (30) is in the form of a relay module, a communication module and/or an interface module, and/or the second electronic assembly (30) has a relay module, a communication module and/or an interface module having the first interface (38).

9. A method for transmitting a hazard signal to an evaluation unit (12, 14), e.g. a fire detector and/or extinguishing control center (12), using a hazard detector (10), in particular as claimed in one of claims 1 to 8, comprising the steps of:
- detecting a hazard parameter, preferably a fire parameter, using at least one sensor unit (22) of the hazard detector (10) or the sensor unit (22) connected to the sensor interface of the hazard detector (10),
- processing the sensor signals of the sensor unit (22) using a first electronic assembly (26) of the hazard detector (10), which assembly is electrically connected to the sensor unit (22),
**characterized in that** the method further comprises:
- transmitting the processed sensor signals using a wireless data connection (32) from at least the first electronic assembly (26) to a second electronic assembly (30) of the hazard detector (10) inside a housing (16) of the hazard detector (10),
- transmitting the processed sensor signals from the second electronic assembly (30) by means of a first interface (38) of the hazard detector (10) to a physically remote evaluation unit (12, 14), and
- supplying the first electronic assembly (26) and/or the sensor unit (22) with power and/or setting up a data connection to the evaluation unit (12, 10 14) or a further evaluation unit (12, 14) by means of a second interface (50).

10. The method as claimed in claim 9, wherein the first electronic assembly (26) receives sensor signals, which are in particular hazard signals (SG), from the sensor unit (22), interprets said sensor signals for the existence of an alarm situation and, if an alarm situation exists, generates an alarm signal (SA) representative of the alarm situation, the hazard detector (10) transmitting the alarm signal (SA) via the wireless data connection (32) to the second electronic assembly (30) and from the second electronic assembly (30) via the first interface (38) to the evaluation unit (12, 14).

11. The method as claimed in claim 9 or 10, wherein the wireless data connection (32) comprises a first transceiver (34) and a second transceiver (36), the first electronic assembly (26) comprising the first transceiver (34) and the second electronic assembly (30) comprising the second transceiver (36), and the first transceiver (34) and the second transceiver (36) transmitting data from the first transceiver (34) to the second transceiver (36) or from the second transceiver (36) to the first transceiver (34).

12. The method as claimed in one of claims 9 to 11, wherein the wireless data connection (32) interchanges data with a third transceiver (44) arrangeable in particular outside the housing (16).

13. The method as claimed in one of claims 9 to 12, wherein the housing (16) has a housing upper part (18) and a housing lower part (20) and the housing upper part (18) is detached from the housing lower part (20) or the housing upper part (18) is detachably connected to the housing lower part (20).

14. A system having at least one hazard detector as claimed in one of claims 1 to 8 and an evaluation unit (12, 14) that is a remote fire detector and/or extinguishing control center (12), a programmable logic controller (14), a building management system or an actuator of an extinguishing installation.

## Revendications

1. Avertisseur de danger pour une unité d'évaluation (12, 14), par exemple une centrale d'alarme incendie et/ou de commande d'extinction (12), comportant :
- un boîtier (16),
- au moins une unité de capteurs (22) ou une interface de capteurs pour le branchement de l'unité de capteurs (22) pour la détection d'une grandeur caractéristique de danger, de préférence une grandeur caractéristique d'incendie,
- un premier ensemble électronique (26) relié électriquement à l'unité de capteurs (22) ou à l'interface de capteurs pour le traitement de signaux de capteurs de l'unité de capteurs (22),
**caractérisé en ce que** l'avertisseur de danger comprend en outre :
- un second ensemble électronique (30), qui est relié à au moins une première interface (38) pour la liaison électrique du second ensemble électrique (30) à une unité d'évaluation (12, 14) distante localement, dans lequel
le premier ensemble électronique (26) et le second ensemble électronique (30) comportent une liaison de données sans fil (32) pour la transmission des signaux de capteur traités depuis au moins le premier ensemble électronique (26) vers le second ensemble électronique (30) et au moins le premier ensemble électronique (26) et le second ensemble électronique (30) sont disposés à l'intérieur du boîtier (16),
dans lequel le premier ensemble électronique (26) est relié directement ou indirectement à une seconde interface (50), dans lequel la seconde interface (50) est agencée pour alimenter le premier ensemble électronique (26) et/ou l'unité de capteurs (22) en énergie pour leur fonctionnement et/ou pour réaliser une liaison de données avec l'unité d'évaluation (12, 14) ou une autre unité d'évaluation (12, 14) .

2. Avertisseur de danger selon la revendication 1, dans lequel le premier ensemble électronique (26) et le second ensemble électronique (30) sont isolés galvaniquement l'un de l'autre.

3. Avertisseur de danger selon la revendication 1 ou 2, dans lequel le premier ensemble électronique (26) est agencé pour recevoir des signaux de capteur, obtenus de l'unité de capteurs (22) ou de l'interface de capteurs, qui sont en particulier des signaux de danger (SG), pour les interpréter sur la présence d'un cas d'alarme et, en présence d'un cas d'alarme, pour générer un signal d'alarme (SA) représentatif du cas d'alarme, dans lequel l'avertisseur de danger (10) est agencé pour transmettre le signal d'alarme (SA) par le biais de la liaison de données sans fil (32) au second ensemble électronique (30) et du second ensemble électronique (30) par le biais de la première interface (38) à une unité d'évaluation (12, 14).

4. Avertisseur de danger selon l'une quelconque des revendications précédentes, dans lequel l'unité d'évaluation (12, 14) est une centrale d'alarme incendie et/ou de commande d'extinction (12) distante, une commande programmable (14), un système domotique ou un actionneur, par exemple une électrovanne, d'une installation d'extinction.

5. Avertisseur de danger selon l'une quelconque des revendications précédentes, dans lequel la liaison de données sans fil (32) comporte un premier émetteur-récepteur (34) et un deuxième émetteur-récepteur (36), et le premier ensemble électronique (26) comporte le premier émetteur-récepteur (34) et le second ensemble électronique (30) comporte le deuxième émetteur-récepteur (36), et le premier émetteur-récepteur (34) et le deuxième émetteur-récepteur (36) sont des émetteurs-récepteurs optiques, de préférence des émetteurs-récepteurs IrDA, ou des émetteurs-récepteurs radiofréquences, de préférence des émetteurs-récepteurs Bluetooth ou NFC.

6. Avertisseur de danger selon l'une quelconque des revendications précédentes, dans lequel la liaison de données sans fil (32) est agencée pour échanger des données avec un troisième émetteur-récepteur (44) qui peut être disposé en dehors du boîtier (16).

7. Avertisseur de danger selon l'une quelconque des revendications précédentes, dans lequel le boîtier (16) comprend une partie supérieure de boîtier (18) et une partie inférieure de boîtier (20), qui sont reliées entre elles de manière détachable, dans lequel au moins le premier ensemble électronique (26) est relié mécaniquement à la partie supérieure de boîtier (18) et au moins le second ensemble électronique (30) est relié mécaniquement à la partie inférieure de boîtier (20).

8. Avertisseur de danger selon la revendication 7, dans lequel la partie inférieure de boîtier (20) comporte la seconde interface (50) et la seconde interface (50) est conçue en tant que dispositif d'alimentation en énergie et de distribution de signaux, de préférence en tant que barrette de bornes de connexion, et/ou le second ensemble électronique (30) est conçu en tant que module relais, module de communication et/ou d'interface, et/ou le second ensemble électronique (30) comprend un module relais, un module de communication et/ou module d'interface avec la première interface (38).

9. Procédé de transmission d'un signal de danger à une unité d'évaluation (12, 14), par exemple une centrale d'alarme incendie et/ou de commande d'extinction (12), avec un avertisseur de danger (10), en particulier selon l'une quelconque des revendications 1 à 8, comportant les étapes :
- de détection d'une grandeur caractéristique de danger, de préférence d'une grandeur caractéristique d'incendie, avec au moins une unité de capteurs (22) de l'avertisseur de danger (10) ou l'unité de capteurs (22) reliée à l'interface de capteurs de l'avertisseur de danger (10),
- de traitement des signaux de capteur de l'unité de capteurs (22) avec un premier ensemble électronique (26) de l'avertisseur de danger (10), qui est relié électriquement à l'unité de capteurs (22),
**caractérisé en ce que** le procédé comprend en outre :
- la transmission des signaux de capteur traités avec une liaison de données sans fil (32) depuis au moins le premier ensemble électronique (26) vers un second ensemble électronique (30) de l'avertisseur de danger (10) à l'intérieur d'un boîtier (16) de l'avertisseur de danger (10),
- la transmission des signaux de capteur traités par le second ensemble électronique (30) au moyen d'une première interface (38) de l'avertisseur de danger (10) vers une unité d'évaluation (12, 14) distante localement et
- l'alimentation du premier ensemble électronique (26) et/ou de l'unité de capteurs (22) en énergie et/ou la réalisation d'une liaison de données avec l'unité d'évaluation (12, 10 14) ou une autre unité d'évaluation (12, 14) au moyen d'une seconde interface (50).

10. Procédé selon la revendication 9, dans lequel le premier ensemble électronique (26) reçoit de l'unité de capteurs (22) des signaux de capteur, qui sont en particulier des signaux de danger (SG), les interprète sur la présence d'un cas d'alarme et, en présence d'un cas d'alarme, génère un signal d'alarme (SA) représentatif du cas d'alarme, dans lequel l'avertisseur de danger (10) transmet le signal d'alarme (SA) par le biais de la liaison de données sans fil (32) au second ensemble électronique (30) et du second ensemble électronique (30) par le biais de la première interface (38) à l'unité d'évaluation (12, 14).

11. Procédé selon la revendication 9 ou 10, dans lequel la liaison de données sans fil (32) comporte un premier émetteur-récepteur (34) et un deuxième émetteur-récepteur (36), dans lequel le premier ensemble électronique (26) comporte le premier émetteur-récepteur (34), et le deuxième ensemble électronique (30) comporte le deuxième émetteur-récepteur (36), et le premier émetteur-récepteur (34) et le deuxième émetteur-récepteur (36) transmettent des données depuis le premier émetteur-récepteur (34) vers le deuxième émetteur-récepteur (36) ou depuis le deuxième émetteur-récepteur (36) vers le premier émetteur-récepteur (34) .

12. Procédé selon l'une quelconque des revendications 9 à 11, dans lequel la liaison de données sans fil (32) échange des données avec un troisième émetteur-récepteur (44), qui peut être disposé en dehors du boîtier (16).

13. Procédé selon l'une quelconque des revendications 9 à 12, dans lequel le boîtier (16) comprend une partie supérieure de boîtier (18) et une partie inférieure de boîtier (20), et la partie supérieure de boîtier (18) est détachée de la partie inférieure de boîtier (20) ou la partie supérieure de boîtier (18) est reliée de manière détachable à la partie inférieure de boîtier (20).

14. Système avec au moins un avertisseur de danger selon l'une quelconque des revendications 1 à 8 et une unité d'évaluation (12, 14) qui est une centrale d'alarme incendie et/ou de commande d'extinction (12) distante, une commande programmable (14), un système domotique ou un actionneur d'une installation d'extinction.
